Europäisches Patentamt

European Patent Office

Office européen des brevets

(19)

(11) EP 0 799 797 B1

(12) **EUROPÄISCHE PATENTSCHRIFT**

(45) Veröffentlichungstag und Bekanntmachung des Hinweises auf die Patenterteilung:
**24.03.1999 Patentblatt 1999/12**

(51) Int. Cl.$^6$: **C01F 11/18**

(21) Anmeldenummer: **96112476.5**

(22) Anmeldetag: **02.08.1996**

(54) **Kontinuierlich arbeitendes Verfahren zur Herstellung von gefälltem Kalziumkarbonat**

Continuous process for the production of precipitated calcium carbonate

Le procédé pour la production de carbonate de calcium précipité

(84) Benannte Vertragsstaaten:
**BE CH DE ES FR GB GR IT LI PT SE**

(30) Priorität: **03.04.1996 AT 598/96**

(43) Veröffentlichungstag der Anmeldung:
**08.10.1997 Patentblatt 1997/41**

(73) Patentinhaber:
**UNITECHNIK-THURNER**
**Anlagenbaugesellschaft mbH**
**3131 Reichersdorf (AT)**

(72) Erfinder: **Thurner, Siegfried**
**3131 Reichersdorf 123 (AT)**

(56) Entgegenhaltungen:
**EP-A- 0 429 707**         **EP-A- 0 480 587**
**DE-A- 2 742 829**        **US-A- 3 150 926**
**US-A- 4 824 654**        **US-A- 4 888 160**

Anmerkung:   Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Xerox (UK) Business Services
2.16.7/3.6

**Beschreibung**

**[0001]**

a) Die Erfindung bezieht sich auf die **kontinuierliche** Herstellung eines Weißpigmentes (Kalziumkarbonat) unter Verwendung von Kalziumhydrat und Kohlendioxidgas, entsprechend der Formel

$$Ca(OH)_2 + CO_2 \leftrightarrow CaCO_3 + H_2O$$

b) Der bisherige Stand der Technik beschränkt sich auf die Mahlung natürlichen Karbonates (Marmor, Kreide) bzw. auf Erfindungen zur Herstellung von Kalziumkarbonat in chargenweisen Prozessen.
c) Aufgabe der Erfindung ist es, ein Verfahren der fortschreitenden Karbonisierung bereitzustellen, wobei die Herstellung in seriell geschalteten Zellen, bis zur Erreichung eines stabilen Kalziumkarbonates, durchgeführt wird.
Ein ebenso entscheidender Teil der Aufgabe ist die Ausführung der Einrichtung zur Dispergierung des Kalziumhydrates mit dem $CO_2$ des Rauchgases.
Die erfindungsgemäße Aufgabe wird durch ein Verfahren gemäß den Ansprüchen 1 bis 4 gelöst.
d) Zur umfassenden industriellen Verwendung des präzipitierten Kalziumkarbonates (PCC) ist neben der Stabilität auch die Erreichung gewünschter Korngrößen und deren Verteilung, sowie die Herstellung bestimmter Kristallformen von besonderer Bedeutung.
e) Das Verfahren erlaubt die Herstellung der von den Anwendern vorwiegend geforderten Kristallformen:

Kalzit - rhombohedral und scalenohedral
Aragonit - acicular

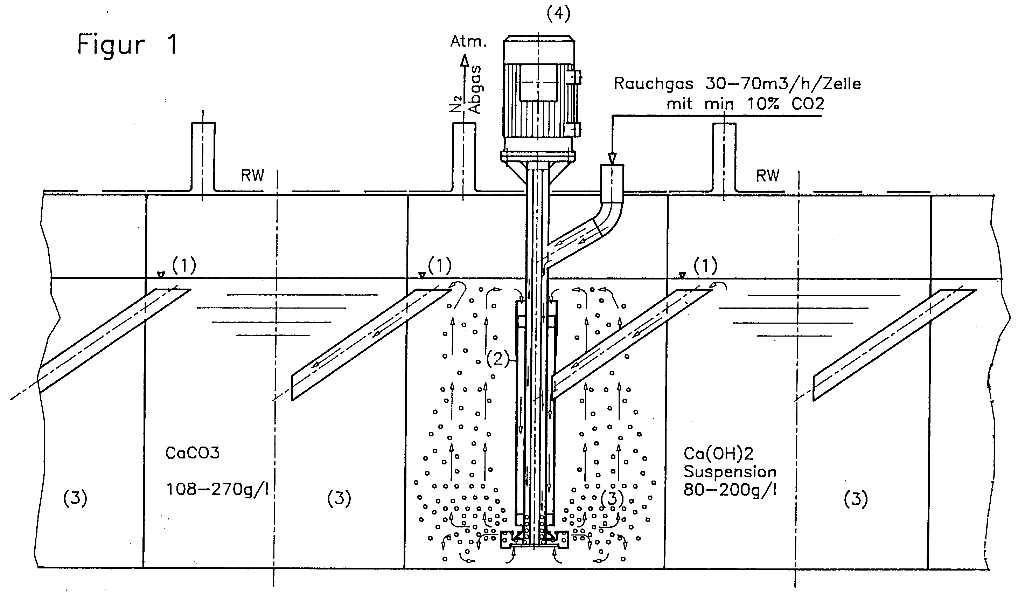

Kalzit erfordert, wie aus der Literatur bekannt, Reaktionstemperaturen unter 30°C, wobei das scalenohedrale Kalzit bei Temperaturen von 25-28°C und das rhombohedrale Kalzit nur bei sehr niederen Temperaturen entsteht. Aragonit benötigt höhere Temperaturen, vorzugsweise 30-36°C.
Eine Beschleunigung der Startzeiten wird dadurch erreicht, daß die erste Zelle mit Karbonat der angestrebten Kristallform zu 2/3 gefüllt und mit Beginn des Hydratdurchflusses sofort das Rauchgas eingeleitet wird.
Die Karbonisierung gelingt schon ab einer $CO_2$ Konzentration im Rauchgas von 10%. Die Leistung der Zellblöcke ist proportional der $CO_2$ Konzentration. Die Korngröße wird von der Konzentration der Hydratsuspension, der Durchflußmenge und dem Rauchgasüberschuß beeinflußt.
f) Die hier beanspruchte Erfindung, dargestellt in Fig.1, besteht - je nach gewünschter Leistung - aus einem bis mehreren Blöcken mit quadratischen Zellen mit wenigstens 340 Liter Inhalt je Zelle.
Jede Zelle(3) ist mit einem speziellen Rührwerk (4) zur Dispergierung des Hydratslurrys mit dem Rauchgas ausgestattet.
Dazu ist ein offenes, kombiniertes Gas- und Slurryrohr (2) über der Rührwerkswelle am Motor zentrisch angeflanscht.
Das Rührorgan erzeugt einen bestimmten Unterdruck, der einerseits die Einbringung des Gases unter minimalem Druck erlaubt und andererseits die Zirkulation innerhalb der Zelle verstärkt.
Diese Kombination ergibt eine Dispergierung, welche die Reaktion zwischen Hydrat und Gas bei kleinster Rührwerksleistung (1,5 kW) ermöglicht. Das Hydrat gelangt von einer Zelle (3) über ein geneigtes Rohr (1) drucklos in das kombinierte Gas- und Slurryrohr (2) der nächsten Zelle. Die Karbonisierung wird über die Rauchgas- bzw. Durchflußmenge, sowie die eingestellte Konzentration der Hydratsuspension gesteuert.

**Patentansprüche**

1. Verfahren zur kontinuierlichen Erzeugung von gefälltem Kalziumkarbonat entsprechend der Formel

$$Ca(OH)_2 + CO_2 \leftrightarrow CaCO_3 + H_2O$$

dadurch gekennzeichnet, daß die Karbonisierung in seriell geschalteten Zellen (3) erfolgt, indem jede Zelle mit einem Rührwerk (4) zur Dispergierung der Hydratslurry mit dem $CO_2$ enthaltenden Gas ausgestattet ist, wobei ein offenes, kombiniertes Gas- und Slurryrohr (2) über der Rührwerkswelle am Motor zentrisch angeflanscht ist, so daß das Rührorgan einen bestimmten Unterdruck erzeugt, der einerseits die Einbringung des Gases in das Rohr (2) erleichtert und andererseits die Zirkulation innerhalb der Zelle verstärkt, und wobei das Hydrat von einer Zelle (3) über ein geneigtes Rohr (1) drucklos in das kombinierte Gas- und Slurryrohr (2) der nächsten Zelle gelangt.

2. Verfahren nach Anspruch 1), dadurch gekennzeichnet, daß Zellen eingesetzt werden, deren Grundriß quadratisch ist und die Höhe mindestens 1000 mm beträgt.

3. Verfahren nach den Ansprüchen 1) und 2), dadurch gekennzeichnet, daß eine Blockanordnung der Zellen vorgesehen ist, wobei sich die Anzahl der Zellen und Blöcke durch die Anlagenkapazität ergibt.

4. Verfahren nach den Ansprüchen 1) bis 3), dadurch gekennzeichnet, daß

scalenohedrales Kalzit bei Temperaturen von unter 28°C,
rhombohedrales Kalzit bei Temperaturen von unter 15°C,
aciculares Aragonit bei Temperaturen von über 30°C hergestellt wird.

## Claims

1. Process for continuous production of precipitated calcium carbonate according to the formula

$$Ca(OH)_2+CO_2 \leftrightarrow CaCO_3 + H_2O$$

characterised by the carbonisation occurring in serially switched cells thus: each cell is equipped with an agitator to disperse the hydroxide lurry with the gas containing the $CO_2$ and an open, combined gas and slurry pipe (2) is centrically flange-mounted over the agitator propeller so that the agitating body creates a certain vaccuum which facilitates the introduction of the gas into the pipe (2) while increasing the circulation within the cell, and the hydroxide passes unpressurized from one cell (3) via an inclined pipe into the combined gas and slurry pipe (2) of the next cell.

2. Process as Claim 1), characterised by the fact that the cells used have a square base and a height of at least 100 mm.

3. Process as Claims 1) and 2), characterised by the fact that the cells are arranged in block form, and the number of cells and blocks is determined by the plant capacity.

4. Process as Claims 1) to 3), characterised by the fact that

scalenohedral calcite is formed at temperatures below 28°C,
rhombohedral calcite at temperatures of under 15°C, and
aciculares aragonite at temperatures of over 30°C.

## Revendications

1. Procédé de production continue de carbonate de calcium precipite en fonction de la formule

$$Ca(OH)_2+CO_2 \leftrightarrow CaCO_3 + H_2O$$

caractérisée par le fait que le processus de carbonisation a lieu dans des cellules conectées en série: chaque cellule est pourvue d'un agitateur pour la dispersion du slurry de lait de chaux avec le gaz contenant du $CO_2$ une conduite ouverte combinée de gaz et de lait de chaux (2) est bridée de manière centrale sur le moteur, au dessus de la pale de l'agitateur, de manière à ce que de l'agitateur produise une certaine vide, laquelle facilite d'une part l'introduction du gaz dans la conduite (2) et renforce d'autre part la circulation à l'intérieur de la cellule. De celle manière, le lait de chaux passe sans pression d'une cellule (3) par une conduite inclinée (1) dans la conduite combinée de gaz et de slurry de la prochaine cellule.

2. Procédé correspondant à la revendication 1), caractérisé par le fait que l'on utilise de cellules de plan carré et d'une hauteur minimale de 1000 mm.

3. Procédé correspondant aux revendications 1)et 2), caractérisé par le fait que l'on prévoit une formation en bloc des cellules, le nombre des cellules et des blocs résultant de la capacité de l'installation.

4. Procédé correspondant aux revendications 1) à 3), caractérisé par le fait que l'on produit

du calcite à forme de scalène à des températures inférieures à 28° C
du calcite à forme de rhomboèdre à des températures inférieures à 15° C et
de l'aragonite acidulaire à des températures supérieures à 30° C.

Figur 1

(4)

Atm.

N₂ Abgas

Rauchgas 30-70m3/h/Zelle
mit min 10% CO2

RW

RW

(1)

(1)

(1)

(2)

CaCO3

108-270g/l

Ca(OH)2
Suspension
80-200g/l

(3)

(3)

(3)

(3)

EP 0 799 797 B1